# EUROPÄISCHE PATENTSCHRIFT

(11) **EP 0 203 535 B1**
(45) Veröffentlichungstag und Bekanntmachung des Hinweises auf die Patenterteilung: **22.12.1993**
(21) Anmeldenummer: 86106979.7
(22) Anmeldetag: 22.05.1986
(51) Int. Cl.: G06F 11/26

(54) **Verfahren zur Simulation eines Fehlers in einer logischen Schaltung und Schaltungsanordnung zur Durchführung desselben**
Method for fault simulation in a logic circuit and circuit arrangement for carrying it out
Méthode pour la simulation d'une erreur dans un circuit logique et dispositif pour la réalisation d'une telle méthode

(30) Priorität: 31.05.1985 DE 3519606
(43) Veröffentlichungstag der Anmeldung: 03.12.1986
(73) Patentinhaber: SIEMENS AKTIENGESELLSCHAFT, 80333 München (DE)
(72) Erfinder: Böhner, Michael, Dipl.-Ing., D-8014 Neubiberg (DE)

(56) Entgegenhaltungen:
- PROCEEDINGS OF THE IEEE INTERNATIONAL CONFERENCE ON CIRCUITS AND COMPUTERS, ICCC'80, Band 2, 1.-3. Oktober 1980, Seiten 594-600, Port Chester, New York, US; P.L. FLAKE et al.: "Logic simulation of bi-directional Tri-state gates"
- DIGITAL PROCESSES, Band 2, Nr. 3, 1976, Seiten 169-180, St-Saphovia, SE; J. HLAVICKA et al.: "Fault model for TTL circuits"
- DIGEST OF PAPERS OF THE 10th INTERNATIONAL SYMPOSIUM ON FAULT-TOLERANT COMPUTING, FTCS-10, 1.-3. Oktober 1980, Seiten 155-157, Kyoto, JP; S. FUNATSU et al.: "Digital fault simulation in bidirectional bus circuit environments "

## Beschreibung

Die Erfindung bezieht sich auf ein Verfahren zur Simulation eines Fehlers in einer logischen Schaltung nach dem Oberbegriff des Patentanspruchs 1 und auf Schaltungsanordnungen zur Durchführung des Verfahrens.

Ein Verfahren der gattungsgemäßen Art ist aus den Proceedings zur IEEE International Conference on Circuit and Computers ICCC 80, Seite 594 bis 599, zu entnehmen. Dabei handelt es sich um eine Logiksimulation bidirektionaler Tristate-Gatter, bei der sieben Zustände von Ausgangspegeln betrachtet werden, wobei undefinierte Ausgangspegel jeweils in mehreren Verfahrensabschnitten als jeweils verschiedene aber definierte Ausgangspegel verarbeitet werden.

Ferner ist aus der Veröffentlichung Digital Processes, Bd. 2, Nr. 3, 1976, Seiten 169 bis 180, Sf-Saphovia, SE von J. Hlavicka et al. ein Fehlermodell für TTL-Schaltungen bekannt, mit dem Testmengen zur Erkennung sogenannter stuck-at-Fehler erzeugbar sind und mit dem Fehler durch kurzgeschlossene Gatterausgänge, bei ursprünglich unterschiedlichen Pegeln, simulierbar sind.

Der Erfindung liegt die Aufgabe zugrunde, ein solches Verfahren anzugeben, das geeignet ist, mit Hilfe eines Simulationsmodells der logischen Schaltung Eingangsbitmuster aufzufinden, die zur sicheren Entdeckung eines speziellen Fehlers führen. Das ist dann der Fall, wenn die Eingangsbitmuster beim Vorhandensein dieses Fehlers Ausgangsbitmuster hervorrufen, die sich in mindestens einem Bit von den Soll-Bitmustern unterscheiden.

Der aufzufindende Fehler soll dabei bewirken, daß zwei in der logischen Schaltung enthaltene Schaltelemente einen gemeinsamen Schaltungsknoten gleichzeitig mit zwei verschiedenen logischen Pegeln speisen, wobei das Anlegen eines insoweit völlig undefinierten logischen Pegels an dem gemeinsamen Schaltungsknoten (Bus) auch als Buskonflikt bezeichnet werden kann. Mit der Erfindung wird nun angestrebt, Eingangsbitmuster aufzufinden, die auch einen zu einem Buskonflikt führenden simulierten Fehler trotz des hierdurch entstehenden undefinierten logischen Zustandes auf dem Bus sicher erkennen lassen, d.h. Ausgangsbitmuster ergeben, die sich eindeutig in mindestens einem Bit von den Soll-Bitmustern unterscheiden.

Diese Aufgabe wird erfindungsgemäß durch eine Ausbildung des eingangs genannten Verfahrens nach dem kennzeichnenden Teil des Patentanspruchs 1 gelöst.

Der mit dem erfindungsgemäßen Verfahren erzielbare Vorteil liegt insbesondere darin, daß auch bei einer Simulation von zu Buskonflikten führenden Fehlern definierte Aussagen auf deren Erkennbarkeit durch Eingangsbitmuster gemacht werden können.

Die Patentansprüche 2 bis 5 sind auf bevorzugte Weiterbildungen des Verfahrens nach Patentanspruch 1 gerichtet, während die Patentansprüche 6 bis 16 vorteilhafte Schaltungsanordnungen zur Durchführung des Verfahrens betreffen.

Die Erfindung wird nachfolgend anhand der Zeichnung näher erläutert. Dabei zeigt:
- Fig. 1: das Ersatzschaltbild eines Teils einer logischen Schaltung mit einem Bus und zwei Eingangsschaltungen,
- Fig. 2: das Blockschaltbild eines Busmodells,
- Fig. 3: eine Funktionstabelle für das Busmodell nach Fig. 2,
- Figuren 4 bis 9: Ausführungsformen des Busmodells, die mit logischen Gattern aufgebaut sind,
- Fig. 10: ein Modell der Eingangsschaltungen nach Fig. 1, das ebenfalls mit logischen Gattern aufgebaut ist, und
- Figuren 11 bis 16: weitere Eingangsschaltungen und ihre mit logischen Gattern aufgebauten Modelle.

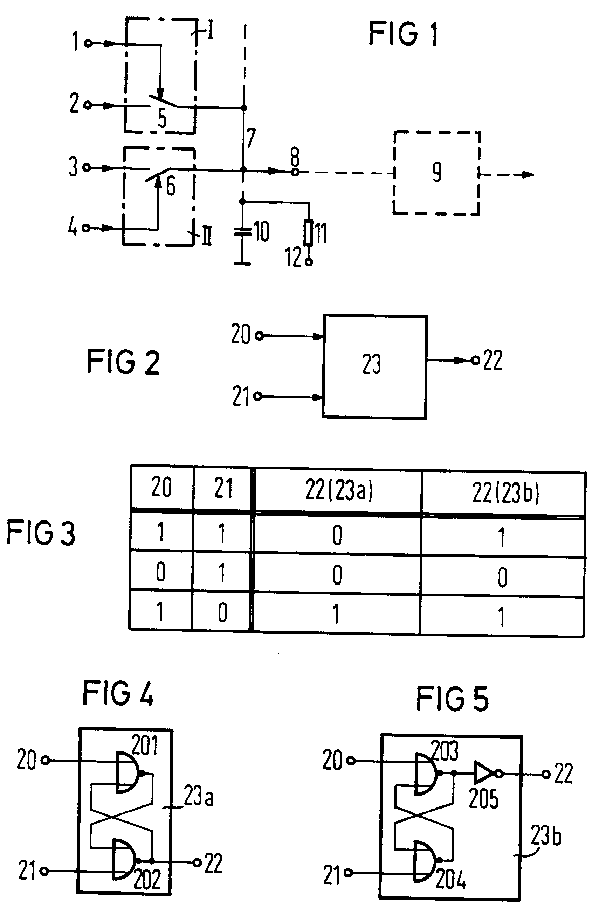

Eine logische Schaltung, von der die Erfindung ausgeht, enthält eine durch das Ersatzschaltbild nach Fig. 1 beschreibbare Teilschaltung. In dieser sind zwei oder mehrere Eingangsschaltungen, z.B. I und II, vorgesehen, die im einfachsten Fall aus jeweils einem Schalter 5 bzw. 6 bestehen. Von diesen ist der Schalter 5 bzw. 6 über einen Eingang 1 derart ansteuerbar, daß beim Anlegen einer logischen 1 der logische Pegel, der am Eingang 2 vorhanden ist, auf den gemeinsamen Schaltungsknoten bzw. Bus 7 durchgeschaltet wird. In analoger Weise wird der Schalter 6 über den Eingang 4 derart angesteuert, daß er beim Anlegen einer logischen 1 den am Eingang 3 vorhandenen logischen Pegel auf den Bus 7 durchschaltet. Durch eine logische 0 an den Eingängen 1 und 4 werden die genannten Pegel vom Bus 7 abgeschaltet. Der Bus 7 weist einen Ausgang 8 auf. Den Eingängen 1 bis 4 sind im allgemeinen weitere Teile der logischen Schaltung vorgeordnet, dem Ausgang 8 sind solche weiteren Teile nachgeordnet.

Unter der Annahme, daß an den Eingängen 1 und 2 jeweils eine logische 1 liegt, während 3 und 4 jeweils mit einer logischen 0 beaufschlagt sind, liegt der Bus 7 auf dem Pegel 1. Ist aber am Eingang 4 ein Haftfehler mit dem Pegel 1 (stuck-at-1) vorhanden, der bewirkt, daß am Eingang 4 ständig eine logische 1 anliegt, so ergibt sich anstelle der vorstehend genannten Belegung 1100 an den Eingängen 1 bis 4 die fehlerhafte Belegung 1101. Dabei wird der Pegel 0 über den Schalter 6 von 3 auf 7 übertragen, obwohl 7 gleichzeitig über den Schalter 5 mit einer logischen 1 beschaltet ist. Es entsteht ein Buskonflikt. Über eine am Ausgang 8 angeschaltete Empfangsschaltung 9 wird der hierbei resultierende Buspegel abgegriffen. Bei einer Realisierung der logischen Schaltung ergibt sich im Falle eines Buskonflikts am Bus 7 ein Pegel, der von den Leerlaufspannungen und Innenwiderständen der beiden mit den Eingängen 2 und 3 verbundenen Spannungsquellen sowie vom Lastwiderstand am Knoten bzw. Bus 7 abhängt. Dieser Pegel wird dann durch die Empfangsschaltung 9, die mit einer Ansprechschwelle versehen ist, beim Überschreiten dieser Schwelle als logische 1 bzw. beim Unterschreiten derselben als logische 0 ausgewertet. Ohne eine genaue Kenntnis der genannten Schaltungsparameter ist aber der im Falle eines Buskonflikts resultierende Pegel am Bus 7 nicht vorherzusagen, sondern muß als undefiniert hingenommen werden.

Der Stuck-at-1-Fehler an 4, der wie beschrieben zu einer fehlerhaften Eingangsbelegung von 1101 an den Eingängen 1 bis 4 führt, kann nur für den Fall entdeckt werden, daß bei der Simulation der logischen Schaltung der wegen des Buskonflikts undefinierte Pegel am Bus 7 durch die Empfangsschaltung 9 auf eine logische 0 am Ausgang 8 abgebildet wird. Da das fehlerfreie Ausgangssignal entsprechend dem fehlerfreien Eingangssignal 1100 eine logische 1 wäre, ist der Fehler hierbei offensichtlich. Würde andererseits der undefinierte Pegel am Bus 7 durch die Empfangsschaltung 9 in eine logische 1 am Ausgang 8 abgebildet werden, wäre der Fehler nicht zu finden, da ja trotz des zu einem Buskonflikt führenden Fehlers am Ausgang 8 der korrekte Ausgangspegel simuliert würde.

Demgegenüber könnte bei einer fehlerhaften Eingangsbelegung von 1011 an den Eingängen 1 bis 4 (mit dem Stuck-at-1-Fehler an 4) der zu dem gleichen Buskonflikt führende Fehler nur dann entdeckt werden, wenn der undefinierte Pegel am Bus 7 bei der Simulation mittels der Empfangsschaltung 9 in eine logische 1 am Ausgang 8 abgebildet würde, nicht jedoch, wenn die Simulation der logischen Schaltung für diesen Fall eine logische 0 am Ausgang 8 ergäbe.

Wenn also nicht von vorneherein feststeht, auf welchen bei 8 abgreifbaren logischen Pegel ein durch einen Buskonflikt hervorgerufener, undefinierter Buspegel bei einer physikalischen Schaltungsrealisierung des Simulationsmodells abgebildet wird, kann der aufzufindende Fehler entweder beim Auftreten der einen oder beim Auftreten der anderen der beiden fehlerhaften Eingangsbelegungen 1101 oder 1011 entdeckbar sein. Es müssen daher bei der Simulation an den Eingängen 2 und 3 beide Eingangsbelegungen 1, 0 und 0, 1 berücksichtigt werden.

Nach der Erfindung wird nun so vorgegangen, daß für den Fall des Buskonflikts ein das Verhalten des Busses 7 für beide Eingangsbelegungen beschreibendes Busmodell 23 erstellt wird. Dieses Busmodell weist gemäß dem Blockschaltbild nach Fig. 2 zwei Eingänge 20 und 21 und einen Ausgang 22 auf. In Fig. 3 ist eine Funktionstabelle des Busmodells 23 dargestellt. Im linken Drittel der Funktionstabelle ist gezeigt, daß für die Eingänge 20 und 21 jeweils die Eingangsbelegungen 1, 1; 0, 1 und 1, 0 in Frage kommen. Dem Eingang 20 wird dann eine logische 1 zugeführt, wenn wenigstens eine der Eingangsschaltungen, z.B. I oder II, eine logische 1 auf den Bus 7 durchschaltet. Ist das nicht der Fall, so wird dem Eingang 20 eine logische 0 zugeführt. Der Eingang 21 wird mit einer logischen 1 belegt, wenn wenigstens eine der Eingangsschaltungen, z.B. II oder I, eine logische 0 auf den Bus 7 durchschaltet. Ist das nicht der Fall, so wird 21 mit einer logischen 0 belegt. Damit ergibt sich, daß in Fig. 3 die erste Zeile der Tabelle mit der Eingangsbelegung 1, 1 den Fall eines Buskonflikts betrifft, während die Zeilen 2 und 3 mit den Eingangsbelegungen 0, 1 und 1, 0 den Normalbetrieb kennzeichnen, in dem ein eindeutiges Datum auf den Bus 7 gelangt. Aus dem mittleren Drittel der Tabelle ergeben sich in den Zeilen 1 bis 3 die Ausgangssignale 0, 0 und 1, während dem rechten Drittel der Tabelle die Ausgangssignale 1, 0 und 1 entnehmbar sind. Die Ausgangssignale des mittleren Drittels werden mittels einer ersten Busmodellversion 23a erhalten, die Ausgangssignale des rechten Drittels mit Hilfe einer zweiten Busmodellversion 23b.

Fig. 4 zeigt eine erste Ausführungsform der ersten Busmodellversion 23a, die einer hochohmigen Schaltungstechnik, z.B. einer MOS-Technologie, entspricht. Diese Ausführungsform besteht aus einem ersten NOR-Gatter 201 und einem zweiten NOR-Gatter 202. Der erste Eingang von 201 entspricht dem Eingang 20 von 23a, der erste Eingang von 202 dem Eingang 21, wobei die zweiten Eingänge beider NOR-Gatter jeweils mit dem Ausgang des anderen Gatters verbunden sind. Der Ausgang von 202 stellt gleichzeitig den Ausgang 22 von 23a dar.

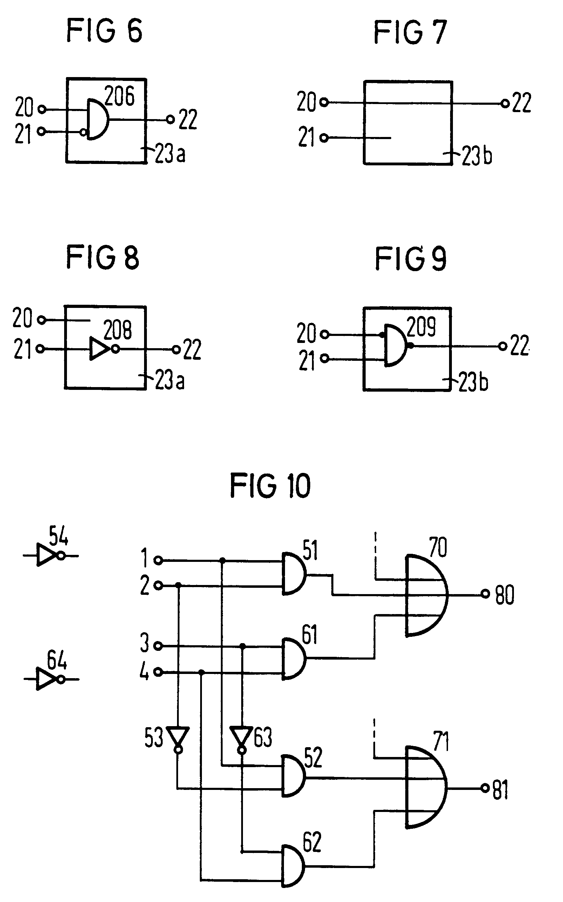

Eine erste Ausführungsform der zweiten Busmodellversion 23b, die einer hochohmigen Schaltungstechnik entspricht, ist in Fig. 5 dargestellt. Hierbei wird wieder von zwei NOR-Gattern 203 und 204 ausgegangen, deren erste Eingänge jeweils den Eingängen 20 und 21 entsprechen. Der zweite Eingang jedes dieser NOR-Gatter ist wieder mit dem Ausgang des jeweils anderen NOR-Gatters verbunden. Der Ausgang von 203 ist über einen Inverter 205 mit dem Ausgang 22 von 23b verbunden.

Bei einer Realisierung der logischen Teilschaltung nach Fig. 1 in hochohmiger Schaltungstechnik, z.B. in MOS-Technologie, besteht für die Busmodellversionen wegen der zu vernachlässigenden Größe des Leitwertes 11 die zusätzliche Bedingung, daß beim Anlegen von 0, 0 an die Eingänge 20, 21, d.h. beim Öffnen aller Schaltelemente in den Eingangsschaltungen I und II, der Pegel auf dem Bus 7 unverändert bestehen bleiben soll. Die Ausführungsformen der Busmodellversionen nach den Figuren 4 und 5 erfüllen diese Bedingung.

Fig. 6 zeigt eine zweite Ausführungsform der ersten Busmodellversion 23a, die einer Realisierung der logischen Teilschaltung nach Fig. 1 in einer niederohmigen Schaltungstechnik entspricht. In diesem Fall ist der Leitwert 11 nach Fig. 1 nicht mehr zu vernachlässigen. Die Busmodellversion 23a besteht dabei aus einem UND-Gatter 206 mit einem nicht invertierenden Eingang, der dem Eingang 20 entspricht und einem invertierenden Eingang, der dem Eingang 21 entspricht. Der Ausgang von 206 bildet gleichzeitig den Ausgang 22 von 23a. In Fig. 7 ist eine zweite Busmodellversion 23b für eine niederohmige Schaltungstechnik dargestellt, bei der der Eingang 20 mit dem Ausgang 22 direkt verbunden ist, während der Eingang 21 im Leerlauf betrieben wird. Wesentlich für die in den Figuren 6 und 7 dargestellten Ausführungsformen ist, daß sie neben den Bedingungen der Funktionstabelle nach Fig. 3 für den Fall einer Eingangsbelegung von 0, 0 jeweils einen Ausgangspegel 0 ergeben, was in Fig. 1 dem Fall entspricht, daß der Anschluß 12 auf dem logischen Pegel 0 liegt und der Bus 7 beim Öffnen aller Schaltelemente sich über den Leitwert 11 auf diesen Pegel entlädt.

Fig. 8 zeigt eine dritte Ausführungsform der ersten Busmodellversion 23a, die einer Realisierung der logischen Teilschaltung nach Fig. 1 in einer niederohmigen Schaltungstechnik entspricht, Fig. 9 eine dritte Ausführungsform der zweiten Busmodellversion 23b für dieselbe Schaltungstechnik. Dabei besteht die erste Busmodellversion 23a in Fig. 8 aus einem den Eingang 21 mit dem Ausgang 22 verbindenden Inverter 208, während der Eingang 20 im Leerlauf betrieben wird. Fig. 9 zeigt eine zweite Busmodellversion 23b, die ein NAND-Gatter 209 enthält. Ein invertierender Eingang von 209 bildet den Eingang 20, ein nicht invertierender Eingang dieses Gatters den Eingang 21. Der Ausgang von 209 stellt den Ausgang 22 dar. Für die Busmodellversionen nach den Figuren 8 und 9 gilt, daß sich bei einer Eingangsbelegung von 0, 0, d.h. beim Öffnen aller Schaltelemente in Fig. 1, auf dem Bus 7 ein Pegel einstellt, der einer logischen 1 entspricht. Dies ist bei der Niederohmigkeit der Schaltung dann der Fall, wenn am Anschluß 12 eine logische 1 anliegt, auf die sich der Bus 7 über den Leitwert 11 beim Abschalten sämtlicher Eingangssignale auflädt.

In Fig. 10 ist ein Modell der Eingangsschaltungen I und II von Fig. 1 dargestellt, das dem Busmodell 23 vorgeschaltet werden kann. Man erkennt hieraus, daß dem Schaltelement 5 von Fig. 1 zwei UND-Gatter 51 und 52 entsprechen. Am Eingang 2 von Fig. 1 liegt ja wie beschrieben ein logisches Signal an, das durch ein logisches Signal am Eingang 1 wahlweise auf den Bus 7 durchgeschaltet werden kann. In Fig. 10 werden diese beiden logischen Signale den Eingängen des UND-Gatters 51 zugeführt. Weiterhin werden diese beiden logischen Signale, jedoch nach vorheriger Inversion des bei 2 anliegenden Signals in einem Inverter 53, an die Eingänge des UND-Gatters 52 gelegt. Analogerweise werden die Signale an den Eingängen 3 und 4 den Eingängen eines UND-Gatters 61 direkt zugeführt sowie nach vorheriger Inversion des Signals an 3 in einem Inverter 63 an die Eingänge eines UND-Gatters 62 gelegt. Die Ausgänge der UND-Gatter 51 und 61 sind an die Eingänge eines ODER-Gatters 70 geschaltet, die Ausgänge der UND-Gatter 52 und 62 an die Eingänge eines ODER-Gatters 71. Schließlich werden die Ausgänge 80 und 81 der Gatter 70 und 71 an die Eingänge 20 und 21 des Busmodells 23 geschaltet.

Für eine beliebige Anzahl von Eingangsschaltungen in Fig. 1 läßt sich ganz allgemein sagen, daß alle Eingangssignale, z.B. die an den Eingängen 2 und 3, mit den zugehörigen Steuersignalen, z.B. die an den Eingängen 1 und 4, in jeweils einem UND-Gatter, z.B. 51 und 61, verknüpft werden. Alle Ausgänge dieser UND-Gatter werden in einem ODER-Gatter 70 zusammengefaßt. Dessen Ausgang 80 speist den Eingang 20 des Busmodells 23. Alle Eingangssignale, z.B. die an den Eingängen 2 und 3, werden weiterhin invertiert, z.B. in den Invertern 53 und 63, und mit den zugehörigen Steuersignalen, z.B. an 1 und 4, in je einem weiteren UND-Gatter, z.B. 52 und 62, verknüpft. Alle Ausgänge dieser UND-Gatter werden in dem weiteren ODER-Gatter 71 zusammengefaßt. Dessen Ausgang 81 speist den Eingang 21 des Busmodells 23.

Bisher wurde davon ausgegangen, daß die Schaltelemente, z.B. 5 und 6, mit dem logischen Pegel 1 durchgeschaltet werden. Werden sie im Gegensatz dazu mit dem logischen Pegel 0 durchgeschaltet, so ist in Fig. 10 in Serie zu den Steuereingängen, z.B. 1 und 4, jeweils ein Inverter, z.B. 54 und 64, vorzusehen. Weiterhin wurde bisher davon ausgegangen, daß die Schaltelemente eine Durchschaltung der an den Eingängen, z.B. 2 und 3, liegenden Pegel auf den Bus 7 ohne Inversion bewirken. Tritt eine solche Inversion auf, so sind in Abweichung von Fig. 10 die Inverter 53 und 63 nicht in den Zuleitungen zu den UND-Gattern 52 und 62 vorzusehen, sondern in den Zuleitungen zu den UND-Gattern 51 und 61, wobei ihre Anordnung in Serie zu den Eingängen 2 und 3 unverändert bestehen bleibt.

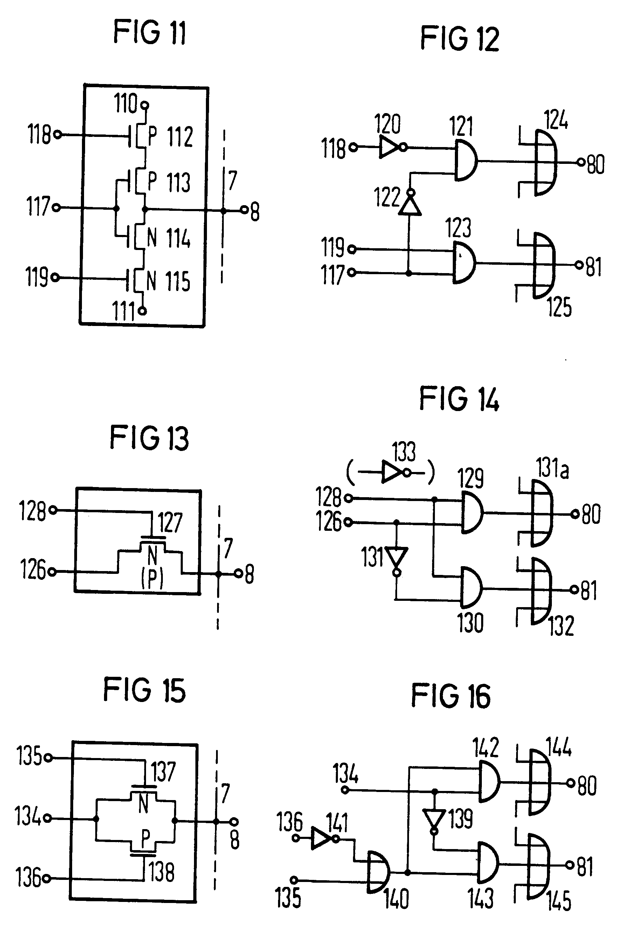

In Fig. 11 ist eine CMOS-spezifische Eingangsschaltung dargestellt, die zur wahlweisen Anschaltung des an einem Eingang 117 liegenden logischen Signals in invertierter Form an den Bus 7 dient. Diese auch als CMOS-Tri-State-Inverter bezeichnete Eingangsschaltung weist zwischen zwei Anschlüssen 110 und 111, die jeweils mit einer Versorgungsspannung und einer Bezugsspannung beschaltet sind, die Serienschaltung zweier P-Kanal-Feldeffekttransistoren 112 und 113 und zweier N-Kanal-Feldeffekttransistoren 114 und 115 auf. Die Gates von 113 und 114 sind mit dem Eingang 117 verbunden, wobei der Verbindungspunkt von 113 und 114 mit dem Bus 7 beschaltet ist. Dessen Ausgang ist wieder mit 8 bezeichnet. Das Gate von 112 ist mit einem Eingang 118 verbunden, das Gate von 115 mit einem Eingang 119. Beim Auftreten einer logischen 1 am Eingang 119 wird eine logische 1 vom Eingang 117 als logische 0 auf den Bus 7 geschaltet. Andererseits wird eine logische 0 vom Eingang 117 beim Auftreten einer logischen 0 am Eingang 118 als logische 1 auf den Bus 7 geschaltet.

Wendet man zur Modellierung dieser Eingangsschaltung die anhand von Fig. 10 erläuterten Regeln an, so ergibt sich ein Modell nach Fig. 12. Hierbei ist 118 über einen Inverter 120 mit dem ersten Eingang eines UND-Gatters 121 verbunden. Der Eingang 117 ist über einen Inverter 122 an den zweiten Eingang von 121 geführt. Andererseits sind die Eingänge 117 und 119 an die Eingänge eines UND-Gatters 123 gelegt. Der Ausgang von 121 ist an einen Eingang eines ODER-Gatters 124 geführt, dessen andere Eingänge zum Beispiel mit den Ausgängen entsprechender UND-Gatter von weiteren, z.B. gleichartigen Eingangsschaltungen verbunden sind. Der Ausgang 80 von 124 wird dann mit dem Eingang 20 des Busmodells 23 beschaltet. Der Ausgang 123 ist an einen Eingang eines ODER-Gatters 125 gelegt, dessen andere Eingänge mit den Ausgängen entsprechender UND-Gatter von weiteren, z.B. gleichartigen Eingangsschaltungen verbunden sind. Der Ausgang 81 von 125 ist mit dem Eingang 21 des Busmodells 23 verbunden.

In Fig. 13 ist eine Eingangsschaltung gezeigt, bei der der an einem Eingang 126 anliegende Pegel über einen N-Kanal-Feldeffekttransistor 127 auf den Bus 7 geschaltet wird. Der Schalttransistor 127 wird durch das Anlegen einer logischen 1 an den Eingang 128 leitend. Die Modellierung dieser Schaltung führt nach Fig. 14 zu zwei UND-Gattern 129 und 130, von denen das erste unmittelbar mit den Eingängen 126 und 128 beschaltet ist, während das zweite mit dem Eingang 128 direkt verbunden ist, mit dem Eingang 126 jedoch über einen Inverter 131. Die Ausgänge von 129 und 130 sind jeweils an einen Eingang zweier ODER-Gatter 131a und 132 geführt, deren Ausgänge 80 und 81 wieder mit den Eingängen 20 und 21 des Busmodells 23 verbunden sind. Weitere Eingänge von 131a und 132 sind mit den Ausgängen weiterer UND-Gatter beschaltet, die entsprechend den UND-Gattern 129 und 130 weiteren, z.B. gleichartigen Eingangsschaltungen zugeordnet sind. Bei Realisierung der Eingangsschaltung mit einem P-Kanal-Feldeffekttransistor 127 wird in das Modell in Serie zum Eingang 128 ein Inverter 133 eingeführt, wie in Fig. 14 angedeutet ist.

Fig. 15 zeigt ein CMOS-Transmissionsgate als Eingangsschaltung, bei dem ein am Eingang 134 anliegender logischer Pegel beim Auftreten einer logischen 1 am Eingang 135 und/oder beim Auftreten einer logischen 0 am Eingang 136 auf den Bus 7 durchgeschaltet wird. Als Schaltelemente dienen jeweils ein N-Kanal-Feldeffekttransistor 137 und ein P-Kanal-Feldeffekettransistor 138, die mit ihren Schaltstrecken jeweils zwischen den Eingang 134 und den Bus 7 eingefügt sind. Das Gate von 137 ist mit dem Eingang 135 verbunden, das Gate von 138 mit dem Eingang 136.

Bei der Modellierung dieser Eingangsschaltung ergibt sich gemäß Fig. 16 eine Gatteranordnung mit zwei UND-Gattern 142 und 143. Der Eingang 134 ist mit dem ersten Eingang von 142 direkt verbunden, mit dem ersten Eingang von 143 über einen Inverter 139. Die Eingänge 135 und 136 liegen an den Eingängen eines ODER-Gatters 140, wobei in Serie zu 136 noch ein Inverter 141 eingefügt ist. Der Ausgang von 140 liegt jeweils an den zweiten Eingängen der Gatter 142 und 143. Die Ausgänge von 142 und 143 liegen an jeweils einem Eingang zweier ODER-Gatter 144 und 145, deren Ausgänge 80 und 81 mit den Eingängen 20, 21 des Busmodells 23 beschaltet sind. Die in Fig. 16 angedeuteten weiteren Eingänge von 144 und 145 sind mit den Ausgängen weiterer UND-Gatter beschaltet, die entsprechend den Gattern 142 und 143 weiteren, z.B. gleichartigen Eingangsschaltungen zugeordnet sind.

Eine logische Schaltung, die eine Teilschaltung des in Fig. 1 angeordneten Typs enthält und einer Fehlersimulation unterzogen werden soll, wird zunächst modelliert. Dies geschieht für die Teilschaltung nach Fig. 1 in der Weise, daß die Eingangsschaltungen, z.B. I und II, die eine Aufschaltung der logischen Pegel auf einen Bus bewirken, durch Gatterfunktionen nachgebildet werden, die entsprechend einer der Figuren 10, 12, 14 oder 16 realisiert werden können. Der Bus, z.B. 7, wird durch ein Busmodell nachgebildet, das insbesondere durch eine Reihe von Gatterfunktionen entsprechend einer der Figuren 4 bis 6 oder 9 oder durch einfachere Schaltungsfunktionen entsprechend der Fig. 7 oder 8 realisiert werden kann. Die Verbindung der vorstehend genannten Modellteile erfolgt zwischen den Ausgängen 80, 81 und den Eingängen 20, 21. Die Modellierung der übrigen Schaltungsteile erfolgt in an sich bekannter Weise.

Das Verfahren nach der Erfindung läuft nun so ab, daß in einem ersten Verfahrensabschnitt an N Eingänge der logischen Schaltung nacheinander eine Folge von N-stelligen Eingangsbitmustern gelegt wird, wobei das Busmodell zunächst in einer der Ausführungsformen der ersten Busmodellversion 23a vorliegt. Jedes dieser Eingangsbitmuster ergibt nun nach dem Durchlaufen der Schaltungsteile bzw. Schaltungsfunktionen, die vor den Eingängen 1 bis 4 oder den entsprechenden Eingängen weiterer Eingangsschaltungen liegen, logische Signale, die diesen Eingängen zugeführt werden.

Jedes dieser Signale, das über ein in einer Eingangsschaltung vorhandenes Schaltelement auf den Bus geschaltet werden soll, wird dabei mit dem dieses Schaltelement steuernden Signal UND-verknüpft. Die UND-verknüpften Signale aller Schaltelemente in den Eingangsschaltungen werden anschließend in einem ersten Gatter, z.B. 70, ODER-verknüpft. Zusätzlich wird für jedes Schaltelement, z.B. 5, 6, in den Eingangsschaltungen das über dieses zu schaltende Signal nach vorheriger Inversion zusammen mit dem das betreffende Schaltelement steuernden Signal UND-verknüpft, wobei diese UND-verknüpften Signale aller Schaltelemente der Eingangsschaltungen in einem zweiten Gatter, z.B. 71, ODER-verknüpft werden. Die Ausgangssignale des ersten und zweiten Gatters 70, 71 werden dann dem ersten und zweiten Eingang 20, 21 der ersten Busmodellversion 23a zugeführt, die wie beschrieben eine den Eingängen 70 und 71 zugeführte Bitmusterfolge 11, 01 und 10 auf die Ausgangssignalfolge 0, 0, 1 abbildet.

Beim Anlegen der Eingangsbitmusterfolge erscheint an den Ausgängen der logischen Schaltung eine Folge von Ausgangsbitmustern. Bei einer fehlerfrei modellierten logischen Schaltung stellt jedes der Ausgangsbitmuster ein Soll-Bitmuster dar, das einem bestimmten Eingangsbitmuster zugeordnet ist. Wird nun in dem vor den Eingängen 1 bis 4 liegenden Schaltungsteil ein Schaltungsfehler vorgesehen, der bezüglich des Busses 7 einen Buskonflikt verursacht und wird bei einem Vergleich der einzelnen dann erhaltenen Ausgangsbitmuster mit den entsprechenden Soll-Bitmustern ein Ausgangsbitmuster festgestellt, das von dem entsprechenden Soll-Bitmuster in wenigstens einem Bit abweicht, so ist damit auch das zugehörige Eingangsbitmuster festgestellt, das beim Vorliegen dieses Fehlers das abweichende Ausgangsbitmuster hervorruft. Führt man dieses Eingangsbitmuster einer der modellierten Schaltung entsprechenden, realisierten logischen Schaltung zu, die auf Fehler zu überprüfen ist, und erhält auch bei dieser das abweichende Ausgangsbitmuster, so ist der simulierte Fehler auch in der zu überprüfenden Schaltung vorhanden.

Bei der Simulation von Fehlern, die zu einem Buskonflikt führen, ist der Fehler unter Umständen im ersten Verfahrensabschnitt noch nicht erkennbar. Um diese Unsicherheit auszuschalten, wird noch ein zweiter Verfahrensabschnitt angefügt, bei dem bei sonst unverändertem Modell die zweite Busmodellversion 23b anstelle der ersten eingesetzt wird. Dabei wird zweckmäßigerweise dieselbe Eingangsbitmusterfolge an die N Schaltungseingänge gelegt. Für den Fall, daß im ersten Verfahrensabschnitt kein abweichendes Ausgangsbitmuster erhalten wurde (aber auch sehr oft beim Vorliegen eines schon im ersten Abschnitt ermittelten abweichenden Ausgangsbitmusters) erhält man im zweiten Verfahrensabschnitt ein (oder ein weiteres) Ausgangsbitmuster, das sich von dem Soll-Bitmuster in wenigstens einem Bit unterscheidet. Das zugehörige Eingangsbitmuster kann einer der modellierten Schaltung entsprechenden, realisierten logischen Schaltung zugeführt werden, die auf Fehler zu überprüfen ist. Erhält man hierbei das vom Soll-Bitmuster abweichende Ausgangsbitmuster, so ist auch in der zu überprüfenden Schaltung der simulierte Fehler vorhanden.

Werden die in beiden Verfahrensabschnitten aufgefundenen Eingangsbitmuster, die zu den von den Soll-Bitmustern abweichenden Ausgangsbitmustern führen, einer zu überprüfenden logischen Schaltung zugeführt, und werden dabei die zugehörigen abweichenden Ausgangsbitmuster erhalten, so ist der zu diesen abweichenden Ausgangsbitmustern gehörige, simulierte Fehler in der zu überprüfenden Schaltung vorhanden.

Der vorstehend beschriebene Verfahrensablauf gilt für den Fall, daß die über die Schaltelemente, z.B. 5, 6, in den Eingangsschaltungen, z.B. I, II, auf den Bus zu schaltenden Signale bei Zuführung des logischen Pegels 1 an die Schaltelemente durchgeschaltet werden. Werden sie jedoch mit dem logischen Pegel 0 durchgeschaltet, so werden die die Schaltelemente steuernden Signale vor den UND-Verknüpfungen jeweils invertiert. Weiterhin wurde bei der vorstehenden Beschreibung des Verfahrensablaufs davon ausgegangen, daß die Schaltelemente jeweils das über sie auf den Bus zu schaltende Signal dabei nicht invertieren. Liegt dagegen bei einem der Schaltelemente eine solche Inversion vor, so wird das betreffende, zu schaltende Signal nicht wie beschrieben vor der dem zweiten Gatter 71 vorgeordneten UND-Verknüpfung invertiert, sondern vor der dem ersten Gatter 70 vorgeordneten UND-Verknüpfung.

Das Verfahren nach der Erfindung kann in einigen Sonderfällen vereinfacht werden. Wenn z.B. ein mit einem Stuck-at-1-Fehler behaftetes Schaltelement einer Eingangsschaltung, z.B. I oder II, ständig mit einem zu schaltenden logischen Signal belegt ist, das dem Signal am Ausgang 8 entspricht, auf welches ein infolge eines Buskonflikts bestehender, undefinierter Buspegel abgebildet wird, so genügt bereits einer der Verfahrensabschnitte, um ein vom Soll-Bitmuster abweichendes, eine Aussage über den Fehler zulassendes Ausgangsbitmuster zu erhalten. Wäre das ständig an dem mit einem Fehler behafteten Schaltelement anliegende logische Signal dabei eine 0, so würde der erste Verfahrensabschnitt bereits zur Ermittlung des abweichenden Ausgangsbitmusters genügen, wäre dieses logische Signal eine 1, so würde der zweite Verfahrensabschnitt ausreichen.

## Patentansprüche

1. Verfahren zur Simulation eines Fehlers in einer logischen Schaltung, die zur wahlweisen Aufschaltung von zwei logischen Pegeln über wenigstens zwei mit Schaltelementen (5, 6) versehene Eingangsschaltungen (I, II) auf einen Schaltungsknoten (7) ausgelegt ist, bei dem von Eingangsbitmustern über ein den Fehler enthaltendes Simulationsmodell der Eingangsschaltungen mit nachgeschaltetem Busmodell Ausgangsbitmuster abgeleitet werden, die mit für den fehlerfreien Fall geltenden Soll-Bitmustern verglichen werden, **dadurch gekennzeichnet,** daß zur Simulation einer fehlerhaften gleichzeitigen Aufschaltung beider logischen Pegel in einem ersten Verfahrensschritt ein Simulationsmodell mit einer ersten Busmodellversion (23a) verwendet wird, die den sich ergebenden undefinierten Buspegel auf den ersten logischen Pegel abbildet, und daß in einem zweiten Verfahrensabschnitt dasselbe Simulationsmodell, jedoch mit einer zweiten, die erste ersetzende Busmodellversion (23b) verwendet wird, die den sich ergebenden undefinierten Buspegel auf den zweiten logischen Pegel abbildet.

2. Verfahren nach Anspruch 1, **dadurch gekennzeichnet,** daß die Eingangsbitmuster im ersten Verfahrensabschnitt mittels des Simulationsmodells so bearbeitet werden, daß zunächst für jedes Schaltelement (5, 6) das über dieses zu schaltende Signal zusammen mit dem das betreffende Schaltelement steuernden Signal UND-verknüpft wird, daß die UND-verknüpften Signale aller Schaltelemente in einem ersten Gatter (70) ODER-verknüpft werden, daß zusätzlich für jedes Schaltelement (5, 6) das über dieses zu schaltende Signal nach vorheriger Inversion zusammen mit dem das betreffende Schaltelement steuernden Signal UND-verknüpft wird, daß die letzteren UND-verknüpften Signale aller Schaltelemente in einem zweiten Gatter (71) ODER-verknüpft werden, daß die Ausgangssignale des ersten und zweiten Gatters (70, 71) dem ersten und zweiten Eingang (20, 21) der ersten Busmodellversion (23a) zugeführt werden, wobei diese so ausgebildet ist, daß sie für eine ihren beiden Eingängen (20, 21) zugeführte Bitmusterfolge 11, 01 und 10 die Ausgangssignalfolge 0, 0, 1 liefert, und daß die im zweiten Verfahrensabschnitt verwendete, zweite Busmodellversion (23b) mit zwei Eingängen (20, 21) und einem Ausgang (22) versehen ist und bei Zuführung der gleichen Bitmusterfolge die Ausgangssignalfolge 1, 0, 1 liefert, wobei die Bearbeitung der Eingangsbitmuster im übrigen der im ersten Verfahrensabschnitt entspricht.

3. Verfahren nach Anspruch 2, **gekennzeichnet durch** die Abweichung, daß für ein Schaltelement, das ein aufzuschaltendes Signal in invertierter Form auf den Bus (7) durchschaltet, dieses aufzuschaltende Signal nicht vor der dem zweiten Gatter (71) vorgeordneten UND-Verknüpfung invertiert wird, sondern vor der dem ersten Gatter (70) vorgeordneten UND-Verknüpfung.

4. Verfahren nach einem der Ansprüche 2 oder 3, **dadurch gekennzeichnet,** daß die die Schaltelemente steuernden Signale vor den UND-Verknüpfungen jeweils invertiert werden.

5. Verfahren nach einem der Ansprüche 1 bis 4, **gekennzeichnet durch** die Abweichung, daß für den Fall einer ständigen Belegung eines eine fehlerhafte Aufschaltung bewirkenden Schaltelements (6) mit einem logischen Pegel anstelle der beiden Verfahrensabschnitte nur derjenige Verfahrensabschnitt herangezogen wird, bei dem die in diesem verwendete Busmodellversion (23a, 23b) einen undefinierten Buspegel auf diesen logischen Pegel abbildet.

6. Schaltungsanordnung zur Simulation eines Fehlers in einer logischen Schaltung, die zur wahlweisen Aufschaltung von zwei logischen Pegeln über wenigstens zwei mit Schaltelementen (5, 6) versehene Eingangsschaltungen (I, II), auf einen Schaltungsknoten (7) angelegt ist, bestehend aus einem Simulationsmodell welches mittels logischer Gatter die Eingangsschaltungen und den Bus nachbildet,
**dadurch gekennzeichnet,**
daß das Simulationsmodell zur Durchführung eines ersten Simulationsschrittes eine erste Busmodellversion (23a) beinhaltet, welche einen sich ergebenden undefinierten Buspegel auf den ersten logischen Pegel abbildet sowie zur Durchführung eines zweiten Siumlationsschrittes eine zweite Busmodellversion beinhaltet, welche einen sich ergebenden undefinierten Buspegel auf den zweiten logischen Pegel abbildet,
daß beide Busmodellversionen (23a, 23b) einen ersten Eingang (20) aufweisen, der anzeigt, ob mindestens ein Eingang den ersten logischen Pegel aufweist sowie einen zweiten Eingang (21) aufweisen, der anzeigt, ob mindestens ein Eingang den zweiten logischen Pegel aufweist.

7. Schaltungsanordnung nach Anspruch 6, **dadurch gekennzeichnet,** daß das Simulationsmodell der logischen Schaltung für jedes ein logisches Signal auf den Schaltungsknoten (Bus) (7) aufschaltende Schaltelement (5) ein erstes und ein zweites UND-Gatter (51, 52) enthält, deren Eingänge jeweils mit dem logischen Signal und mit dem das Schaltelement steuernden Signal belegt sind, wobei dem mit dem logischen Signal belegten Eingang des zweiten UND-Gatters (52) ein erster Inverter vorgeschaltet ist, daß die Ausgänge aller ersten UND-Gatter (51) mit den Eingängen eines ersten ODER-Gatters (70) beschaltet sind, daß die Ausgänge aller zweiten UND-Gatter (52) mit den Eingängen eines zweiten ODER-Gatters (71) beschaltet sind und daß der Ausgang (80) des ersten ODER-Gatters (70) mit dem ersten Eingang (20) der ersten oder zweiten Busmodellversion (23a, 23b) und der Ausgang (81) des zweiten ODER-Gatters (71) mit dem zweiten Eingang (21) der ersten oder zweiten Busmodellversion (23a, 23b) verbunden ist.

8. Schaltungsanordnung nach Anspruch 6, **dadurch gekennzeichnet,** daß das Simulationsmodell der logischen Schaltung für jedes ein logisches Signal in invertierter Form auf den Schaltungsknoten (Bus) (7) aufschaltende Schaltelement ein drittes und ein viertes UND-Gatter enthält, deren Eingänge jeweils mit dem logischen Signal und mit dem das Schaltelement steuernden Signal belegt sind, wobei dem mit dem logischen Signal belegten Eingang des dritten UND-Gatters ein zweiter Inverter vorgeschaltet ist, daß die Ausgänge aller dritten UND-Gatter mit den Eingängen eines dritten ODER-Gatters beschaltet sind, daß die Ausgänge aller vierten UND-Gatter mit den Eingängen eines vierten ODER-Gatters beschaltet sind und daß der Ausgang des dritten ODER-Gatters mit dem ersten Eingang (20) der ersten oder zweiten Busmodellversion (23a, 23b) und der Ausgang des vierten ODER-Gatters mit dem zweiten Eingang (21) der ersten oder zweiten Busmodellversion (23a, 23b) verbunden ist.

9. Schaltungsanordnung nach einem der Ansprüche 7 oder 8, **dadurch gekennzeichnet,** daß bei jedem Schaltelement, das ein logisches Signal bei Zuführung eines den logischen Pegel 0 aufweisenden steuernden Signals auf den Schaltungsknoten (Bus) aufschaltet, dieses steuernde Signal einen dem ersten und zweiten bzw. dem dritten und vierten UND-Gatter vorgeschalteten dritten Inverter durchläuft.

10. Schaltungsanordnung nach einem der Ansprüche 7 bis 9, **dadurch gekennzeichnet,** daß bei einem Schaltelement (137, 138) mit zwei getrennten Ansteuerleitungen (135, 136), auf denen jeweils zueinander inverse, das Schaltelement steuernde Signale zugeführt werden, diese steuernden Signale den beiden Eingängen eines fünften ODER-Gatters (140) zugeführt werden, wobei dem einen dieser beiden Eingänge ein vierter Inverter (141) vorgeschaltet ist, und daß der Ausgang des fünften ODER-Gatters (140) mit jeweils einem Eingang des ersten und zweiten UND-Gatters (142, 143) oder des dritten und vierten UND-Gatters verbunden ist.

11. Schaltungsanordnung nach Anspruch 6, **dadurch gekennzeichnet,** daß das Simulationsmodell der logischen Schaltung für ein Schaltelement, das aus einer Serienschaltung zweier P-Kanal-Feldeffekttransistoren (112, 113) und zweier N-Kanal-Feldeffekttransistoren (114, 115) besteht, die zwischen einen Anschluß (110) für eine Versorgungsspannung und einen Anschluß (111) für eine Bezugsspannung eingefügt ist, wobei die Gates des einen P-Kanal-Feldeffekttransistors (113) und des mit diesem unmittelbar verbundenen N-Kanal-Feldeffekttransistor (114) an einen gemeinsamen Anschluß (117) gelegt sind, der mit einem aufzuschaltenden logischen Signal beaufschlagt ist, wobei der Verbindungspunkt der beiden letztgenannten Feldeffekttransistoren mit dem gemeinsamen Schaltungsknoten (Bus) (7) beschaltet ist und wobei die Gates der beiden übrigen Feldeffekttransistoren (112, 115) mit jeweils mit einem Steuereingang verbunden sind, in der Weise ausgebildet ist, daß ein fünftes und ein sechstes UND-Gatter (121, 123) vorgesehen sind, deren ersten Eingängen jeweils das aufzuschaltende logische Signal zugeführt wird, wobei dem ersten Eingang des fünften UND-Gatters (121) ein Inverter vorgeschaltet ist, daß die zweiten Eingänge des fünften und sechsten UND-Gatters (121, 123) jeweils mit einem der Steuereingänge verbunden sind, wobei dem zweiten Eingang des fünften UND-Gatters ein fünfter Inverter vorgeschaltet ist, daß der Ausgang des fünften UND-Gatters (121) mit einem Eingang eines sechsten ODER-Gatters (124) beschaltet ist, daß der Ausgang des sechsten UND-Gatters (123) mit einem Eingang eines siebten ODER-Gatters (125) beschaltet ist und daß die Ausgänge des sechsten und siebten ODER-Gatters jeweils mit den Eingängen (20, 21) der ersten oder zweiten Busmodellversion (23a, 23b) verbunden sind.

12. Schaltungsanordnung nach Anspruch 6, **dadurch gekennzeichnet,** daß die erste Busmodellversion (23a) aus zwei NOR-Gattern besteht, deren erste Eingänge die Eingänge der Busmodellversion bilden und deren zweite Eingänge jeweils mit dem Ausgang des anderen NOR-Gatters verbunden sind, wobei der Ausgang des mit dem zweiten Eingang der Busmodellversion verbundenen NOR-Gatters den Ausgang der Busmodellversion darstellt.

13. Schaltungsanordnung nach Anspruch 6, **dadurch gekennzeichnet,** daß die erste Busmodellversion (23a) aus einem siebten UND-Gatter (206) mit einem nicht invertierenden und einem invertierenden Eingang besteht, wobei der erstere den ersten Eingang und der letztere den zweiten Eingang der Busmodellversion bildet und der Ausgang dieses UND-Gatters (206) den Ausgang der Busmodellversion darstellt.

14. Schaltungsanordnung nach Anspruch 6, **dadurch gekennzeichnet,** daß die erste Busmodellversion (23a) aus einem sechsten Inverter besteht, dessen Eingang den zweiten Eingang und dessen Ausgang den Ausgang der Busmodellversion bildet, wobei der erste Eingang der Busmodellversion im Leerlauf betrieben wird.

15. Schaltungsanordnung nach Anspruch 6, **dadurch gekennzeichnet,** daß die zweite Busmodellversion (23b) aus zwei NOR-Gattern (203, 204) besteht, deren erste Eingänge die Eingänge der Busmodellversion bilden und deren zweite Eingänge jeweils mit dem Ausgang des anderen NOR-Gatters verbunden sind, wobei der Ausgang des mit dem ersten Eingang der Busmodellversion verbundenen NOR-Gatters über einen siebten Inverter (205) mit dem Ausgang der Busmodellversion verbunden ist.

16. Schaltungsanordnung nach Anspruch 6, **dadurch gekennzeichnet,** daß die zweite Busmodellversion (23b) so ausgebildet ist, daß ihr erster Eingang direkt mit ihrem Ausgang verbunden ist, wobei ihr zweiter Eingang im Leerlauf betrieben wird.

17. Schaltungsanordnung nach Anspruch 6, **dadurch gekennzeichnet,** daß die zweite Busmodellversion (23b) aus einem NAND-Gatter (209) mit einem invertierenden und einem nicht invertierenden Eingang besteht, wobei der invertierende Eingang den ersten Eingang der Busmodellversion bildet, der nicht invertierende Eingang den zweiten Eingang der Busmodellversion darstellt und der Ausgang des NAND-Gatters den Ausgang der Busmodellversion bildet.

## Claims

1. Method for simulating a fault in a logic circuit which is designed for the optional application of two logic levels to a circuit node (7) via at least two input circuits (I, II) provided with switch elements (5, 6), in which output bit patterns are derived from input bit patterns by means of a simulation model of the input circuits containing the fault with downstream bus model and are compared with reference bit patterns applicable in the fault-free case, characterized in that for simulating an erroneous simultaneous application of both logic levels, in a first method step a simulation model with a first bus model version (23a) is used which maps the resulting undefined bus level onto the first logic level, and in that in a second method stage the same simulation model is used, but with a second bus model version (23b) replacing the first one which maps the resulting undefined bus level onto the second logic level.

2. Method according to Claim 1, characterized in that in the first method stage the input bit patterns are processed by means of the simulation model in such a way that first of all for each switch element (5, 6) the signal to be switched via it is AND-gated together with the signal controlling the respective switch element, in that the AND-gated signals of all switch elements are OR-gated in a first gate (70), in that in addition for each switch element (5, 6), after being inverted, the signal to be switched via it is AND-gated together with the signal controlling the respective switch element, in that the latter AND-gated signals of all switch elements are OR-gated in a second gate (71), in that the output signals of the first and second gate (70, 71) are supplied to the first and second input (20, 21) of the first bus model version (23a), the latter being designed in such a way that it produces the output signal sequence 0, 0, 1 for a bit pattern sequence 11, 01 and 10 supplied to its two inputs (20, 21), and in that the second bus model version (23b) used in the second method stage is provided with two inputs (20, 21) and one output (22) and produces the output signal sequence 1, 0, 1 if it is supplied with the same bit pattern sequence, the processing of the input bit patterns otherwise corresponding to that of the first method stage.

3. Method according to Claim 2, characterized by the deviation that for a switch element which connects a signal to be applied through to the bus (7) in inverted form, said signal to be applied is not inverted before the AND-gating preceding the second gate (71), but rather before the AND-gating preceding the first gate (70).

4. Method according to one of Claims 2 or 3, characterized in that the signals controlling the switch elements are inverted before the AND-gatings in each case.

5. Method according to one of Claims 1 to 4, characterized by the deviation that, in the case of a constant occupation of a switch element (6) causing a faulty application by one logic level, instead of the two method stages only the method stage in which the bus model version (23a, 23b) used therein maps an undefined bus level onto said logic level is used.

6. Circuit arrangement for simulating a fault in a logic circuit which is designed for the optional application of two logic levels to a circuit node (7) via at least two input circuits (I, II) provided with switch elements (5, 6), comprising a simulation model which simulates the input circuits by means of logic gates, characterized in that for carrying out a first simulation step the simulation model contains a first bus model version (23a) which maps a resulting undefined bus level onto the first logic level, and also for carrying out a second simulation step contains a second bus model version which maps a resulting undefined bus level onto the second logic level, in that both bus model versions (23a, 23b) have a first input (20) which indicates whether at least one input exhibits the first logic level and also a second input (21) which indicates whether at least one input exhibits the second logic level.

7. Circuit arrangement according to Claim 6, characterized in that the simulation model of the logic circuit contains for each switch element (5) applying a logic signal onto the circuit node (bus) (7) a first and a second AND gate (51, 52), the inputs of which are occupied by the logic signal and by the signal controlling the switch element respectively, a first inverter being connected upstream of the input of the second AND gate (52) occupied by the logic signal, in that the outputs of all first AND gates (51) are connected to the inputs of a first OR gate (70), in that the outputs of all second AND gates (52) are connected to the inputs of a second OR gate (71), and in that the output (80) of the first OR gate (70) is connected to the first input (20) of the first or second bus model version (23a, 23b) and the output (81) of the second OR gate (71) is connected to the second input (21) of the first or second bus model version (23a, 23b).

8. Circuit arrangement according to Claim 6, characterized in that for each switch element applying a logic signal in inverted form onto the circuit node (bus) (7), the simulation model of the logic circuit contains a third and a fourth AND gate, the inputs of which are occupied by the logic signal and by the signal controlling the switch element respectively, a second inverter being connected upstream of the input of the third AND gate occupied by the logic signal, in that the outputs of all third AND gates are connected to the inputs of a third OR gate, in that the outputs of all fourth AND gates are connected to the inputs of a fourth OR gate, and in that the output of the third OR gate is connected to the first input (20) of the first or second bus model version (23a, 23b) and the output of the fourth OR gate is connected to the second input (21) of the first or second bus model version (23a, 23b).

9. Circuit arrangement according to one of Claims 7 or 8, characterized in that for each switch element that applies a logic signal onto the circuit node (bus) given the supply of a controlling signal having the logic level 0, said controlling signal passes through a third inverter connected upstream of the first and second or third and fourth AND gates respectively.

10. Circuit arrangement according to one of Claims 7 to 9, characterized in that in the case of a switch element (137, 138) with two separate selection lines (135, 136) on which in each case mutually inverted signals controlling the switch element are supplied, said controlling signals are supplied to the two inputs of a fifth OR gate (140), a fourth inverter (141) being connected upstream of one of said two inputs, and in that the output of the fifth OR gate (140) is connected in each case to one input of the first and second AND gate (142, 143) or of the third and fourth AND gate.

11. Circuit arrangement according to Claim 6, characterized in that the simulation model of the logic circuit for a switch element comprising a series connection of two p-channel field effect transistors (112, 113) and two n-channel field effect transistors (114, 115), which is inserted between a terminal (110) for a supply voltage and a terminal (111) for a reference voltage, in which the gates of the one p-channel field effect transistor (113) and of the n-channel field effect transistor (114) connected directly thereto are connected to a common terminal (117) which receives a logic signal to be applied, in which the junction of the two last-mentioned field effect transistors is connected to the common circuit node (bus) (7) and in which the gates of the two other field effect transistors (112, 115) are connected in each case to a control input, is designed in such a manner that a fifth and a sixth AND gate (121, 123) are provided, to the first inputs of which in each case the logic signal to be applied is supplied, an inverter being connected upstream of the first input of the fifth AND gate (121), in that the second inputs of the fifth and sixth AND gate (121, 123) are connected in each case to one of the control inputs, a fifth inverter being connected upstream of the second input of the fifth AND gate, in that the output of the fifth AND gate (121) is connected to an input of a sixth OR gate (124), in that the output of the sixth AND gate (123) is connected to an input of a seventh OR gate (125), and in that the outputs of the sixth and seventh OR gate are connected in each case to the inputs (20, 21) of the first or second bus model version (23a, 23b).

12. Circuit arrangement according to Claim 6, characterized in that the first bus model version (23a) comprises two NOR gates, the first inputs of which form the inputs of the bus model version and the second inputs of which are connected in each case to the output of the other NOR gate, the output of the NOR gate connected to the second input of the bus model version representing the output of the bus model version.

13. Circuit arrangement according to Claim 6, characterized in that the first bus model version (23a) comprises a seventh AND gate (206) with one non-inverting input and one inverting input, the former forming the first input and the latter forming the second input of the bus model version, and the output of said AND gate (206) representing the output of the bus model version.

14. Circuit arrangement according to Claim 6, characterized in that the first bus model version (23a) comprises a sixth inverter, the input of which forms the second input and the output of which forms the output of the bus model version, the first input of the bus model version being operated in no-load mode.

15. Circuit arrangement according to Claim 6, characterized in that the second bus model version (23b) comprises two NOR gates (203, 204), the first inputs of which form the inputs of the bus model version and the second inputs of which are connected in each case to the output of the other NOR gate, the output of the NOR gate connected to the first input of the bus model version being connected to the output of the bus model version via a seventh inverter (205).

16. Circuit arrangement according to Claim 6, characterized in that the second bus model version (23b) is designed in such a way that its first input is connected directly to its output, its second input being operated in no-load mode.

17. Circuit arrangement according to Claim 6, characterized in that the second bus model version (23b) comprises a NAND gate (209) with one inverting input and one non-inverting input, the inverting input forming the first input of the bus model version, the non-inverting input representing the second input of the bus model version, and the output of the NAND gate forming the output of the bus model version.

## Revendications

1. Procédé pour simuler une erreur dans un circuit logique, qui est agencé de manière à appliquer au choix deux niveaux logiques, par l'intermédiaire d'au moins deux circuits d'entrée (I,II) munis d'éléments de commutation (5, 6), à un noeud (7) du circuit, selon lequel des profils binaires de sortie, qui sont comparés à des profils binaires de consigne valables pour le cas sans erreur, sont obtenus à partir de profils binaires d'entrée par l'intermédiaire d'un modèle de simulation, contenant l'erreur, des circuits d'entrée, avec un modèle de bus monté en aval, caractérisé par le fait que pour la simulation d'une application simultanée, sans erreur, de deux niveaux logiques lors d'une première étape opératoire, on utilise un modèle de simulation ayant une première version (23a) du modèle de bus, qui reproduit le niveau de bus indéfini obtenu, sur le premier niveau logique, et que lors d'une seconde étape opératoire, on utilise le même modèle de simulation, mais avec une seconde version (23b) du modèle de bus, qui remplace la première version et qui reproduit le niveau de bus indéfini obtenu, sur le second niveau logique.

2. Procédé suivant la revendication 1, caractérisé par le fait que les profils binaires d'entrée sont traités, pendant la première partie du procédé, au moyen du modèle de simulation de sorte que, tout d'abord, pour chaque élément de commutation (5,6), le signal devant être commuté par l'intermédiaire de cet élément de commutation est combiné selon la combinaison ET au signal qui commande l'élément de commutation considéré, que les signaux, combinés selon la combinaison ET, de tous les éléments de commutation sont combinés selon la combinaison OU dans une première porte (70), qu'en plus, pour chaque élément de commutation(5,6), le signal devant ètre commuté par l'intermédiaire de cet élément de commutation est combiné selon la combinaison ET et après inversion préalable, au signal qui commande l'element de commutation considéré, que les derniers signaux, combinés selon la combinaison ET, de tous les éléments de commutation, sont combinés selon la combinaison OU dans une seconde porte(71), que les signaux de sortie des première et seconde portes (70,71) sont envoyés aux première et seconde entrées (20,21) de la première version (23a) du modèle de bus, cette version étant agencée de telle sorte qu'elle fournit la séquence de signaux de sortie 0,0,1 pour une séquence de profils binaires 11,01 et 10, envoyée aux deux entrées (20,21) de cette version du modèle de bus, et que la seconde version (23b) du modèle de bus, qui est utilisée dans la seconde partie du procédé, est munie de deux entrées (20,21) et d'une sortie (22), et délivre, lors de l'envoi de la même séquence de profils binaires, la séquence de signaux d'entrée 1,0,1, le traitement du profil binaire d'entrée correspondant par ailleurs au traitement intervenant pendant la première partie du procédé.

3. Procédé suivant la revendication 2, caractérisé par la différence consistant en ce que, pour un élément de commutation, qui transmet directement un signal à appliquer, sous forme inversée au bus (7), ce signal à appliquer n'est pas inversé avant la combinaison ET exécutée en amont de la seconde porte (71), mais avant la combinaison ET exécutée en amont de la première porte (70).

4. Procédé suivant l'une des revendications 2 ou 3, caractérisé par le fait que les signaux commandant les éléments de commutation sont inversés respectivement avant l'exécution des combinaisons ET.

5. Procédé suivant l'une des revendications 1 à 4, caractérisé par la différence consistant en ce que, dans le cas d'une émulation permanente d'un élément de commutation (6) réalisant une application défectueuse, avec un niveau logique, on utilise à la place des deux étapes opératoires, seulement l'étape opératoire, lors de laquelle la version (23a,23b) du modèle de bus, qui est utilisée dans cette étape opératoire, reproduit un niveau de bus indéfini sur ce niveau logique.

6. Montage pour la simulation d'une erreur dans un circuit logique, qui, pour l'injection au choix de deux niveaux logiques, est appliquée par l'intermédiaire d'au moins deux circuits d'entrée (I,II) munis d'éléments de commutation ( 5,6), à un noeud (7) du circuit, constitué d'un modèle de simulation, qui simule, au moyen de portes logiques, les circuits d'entrée et le bus,
caractérisé par le fait
que le modèle de simulation pour la mise en oeuvre d'une première étage de simulation, comporte une première version (23a) du modèle de bus, qui reproduit un niveau de bus indéfini obtenu, sur le premier niveau logique et pour la mise en oeuvre d'une seconde étage de simulation, contient une seconde version du modèle de bus, qui reproduit un niveau de bus indéfini obtenu, sur le second niveau logique,
que les deux versions (23a,23b) du modèle de bus comportent une première entrée (20), qui indique si au moins une entrée présente le premier niveau logique, ainsi qu'une seconde entrée (21) qui indique si au moins une entrée présente le second niveau logique.

7. Montage suivant la revendication 6, caractérisé par le fait que le modèle de simulation du circuit logique comporte, pour chaque élément de commutation (5) appliquant un signal logique au noeud (Bus) (7) du circuit, une première et une deuxième portes ET (51,52), dont les entrées sont occupées respectivement par le signal logique et par le signal commandant l'élément de commutation, un premier inverseur étant branché en amont de l'entrée, occupée par le signal logique, de la seconde porte ET (52), que les sorties de l'ensemble des premières portes ET (51) sont reliées aux entrées d'une première porte OU (70), que les sorties de l'ensemble des deuxièmes portes ET (52) sont reliées à l'entrée d'une deuxième porte OU (71), que la sortie (80) de la première porte OU (70) est reliée à la première entrée (20) de la première ou de la seconde version (23a,23b) du modèle de bus et que la sortie (81) de la seconde porte OU (71) est reliée à la seconde entrée (21) de la première ou de la seconde version (23a,23b) du modèle de bus.

8. Montage suivant la revendication 6, caractérisé par le fait que le modèle de simulation du circuit logique comporte, pour chaque élément de commutation appliquant un signal logique sous forme inversée au niveau du noeud (bus) (7) du circuit, une troisième et une quatrième portes ET, dont les entrées sont occupées respectivement par le signal logique et par le signal commandant l'élément de commutation, un deuxième inverseur étant branché en amont de l'entrée, occupée par le signal logique, de la troisième portes ET, que les sorties de l'ensemble des troisième portes ET sont reliées aux entrées d'une troisième porte OU, que les sorties de l'ensemble des quatrièmes portes ET sont reliées aux entrées d'une quatrième porte OU, que la sortie de la troisième porte OU est reliée à la première entrée (20) de la première ou de la seconde version (23a,23b) du modèle de bus, et que la sortie de la quatrième porte OU est reliée à la seconde entrée (21) de la première ou de la seconde version (23a,23b) du modèle de bus.

9. Montage suivant l'une des revendications 7 ou 8, caractérisé par le fait que, pour chaque élément de commutation, qui applique un signal logique au noeud (bus) du circuit, lors de l'arrivée d'un signal de commande présentant le niveau logique 0, ce signal de commande traverse un troisième inverseur qui est branché en amont des première et deuxième portes ou des troisième et quatrième portes ET.

10. Montage suivant l'une des revendications 7 à 9, caractérisé par le fait que, dans un élément de commutation (137,138) comportant deux lignes séparées de commande (135,136) dans lesquelles sont envoyés des signaux inverses les uns par rapport aux autres, qui commandent l'élément de commutation, ces signaux de commande sont envoyés aux deux entrées d'une cinquième porte OU (140), un quatrième inverseur (141) étant branché en amont de l'une de ces deux entrées, que la sortie de la cinquième porte (140) est connectée respectivement à une entrée des première et deuxième portes ET (142,143) ou des troisième et quatrième portes ET.

11. Montage suivant la revendication 6, caractérisé par le fait que, pour un élément de commutation, qui est constitué d'un circuit série formé par deux transistors à effet de champ à canal P (112,113) et deux transistors à effet de champ à canal N (114,115), qui sont insérés entre une borne (110) pour une tension d'alimentation et une borne (111) pour une tension de référence, les grilles d'un des transistors à effet de champ à canal P (113) et du transistor à effet de champ à canal N (114), qui est relié directement au transistor précédent, étant connectées à une borne commune (117), qui est chargée par un signal logique devant être injecté, et le point de jonction des deux transistors à effet de champ indiqués en dernier lieu étant relié au noeud commun (bus) (7) du circuit, tandis que les grilles des deux autres transistors à effet de champ (112,115) sont reliées respectivement à une entrée de commande, le modèle de simulation du circuit logique est agencé de telle sorte qu'il est prévu une cinquième et une sixième portes ET (121,123), aux premières entrées desquelles est envoyé respectivement le signal logique devant être injecté, un inverseur étant branché en amont de la première entrée de la cinquième porte ET (121), que les secondes entrées des cinquième et sixième portes ET (121,123) sont reliées respectivement à l'une des entrées de commande, tandis qu'un cinquième inverseur est branché en amont de la seconde entrée de la cinquième porte ET, que la sortie de la cinquième porte ET (121) est connectée à une entrée d'une sixième porte OU (124), que la sortie de la sixième porte ET (123) est connectée à une entrée d'une septième porte OU (125) et que les sorties des sixième et septième portes OU sont connectées respectivement aux entrées (20,21) de la première ou de la seconde version (23a,23b) du modèle de bus.

12. Montage suivant la revendication 6, caractérisé par le fait que la première version (23a) du modèle de bus est constituée de deux portes NON-OU, dont les premières entrées forment les entrées de la version du modèle de bus et dont les secondes entrées sont reliées respectivement à la sortie de l'autre porte NON-OU, la sortie de la porte NON-OU reliée à la seconde entrée de la version du modèle de bus représentant la sortie de cette version.

13. Montage suivant la revendication 6, caractérisé par le fait que la première version (23a) du modèle de bus est constituée d'une septième porte ET (206) comportant une entrée non inverseuse et une entrée inverseuse, la première entrée non inverseuse constituant la première entrée de la version du modèle de bus et la seconde entrée inverseuse constituant la seconde entrée de la version du modèle de bus, tandis que la sortie de cette porte ET (206) représente la sortie de la version du modèle de bus.

14. Montage suivant la revendication 6, caractérisé par le fait que la première version (23a) du modèle de bus est constituée d'un sixième inverseur, dont l'entrée forme la seconde entrée de la version du modèle de bus et dont la sortie constitue la sortie de la version du modèle de bus, la première entrée de la version du modèle de bus fonctionnant à vide.

15. Montage suivant la revendication 6, caractérisé par le fait que la seconde version (23b) du modèle de bus est constituée de deux portes NON-OU (203,204), dont les premières entrées forment les entrées de la version du modèle de bus et dont les secondes entrées sont connectées respectivement à la sortie de l'autre porte NON-OU, la sortie de la porte NON-OU reliée à la première entrée de la version du modèle de bus étant connectée, par l'intermédiaire d'un septième inverseur (205), à la sortie de la version du modèle de bus.

16. Montage suivant la revendication 6, caractérisé par le fait que la seconde version (23b) du modèle de bus est agencée de telle sorte que sa première entrée est connectée directement à sa sortie, sa seconde entrée fonctionnant à vide.

17. Montage suivant la revendication 6, caractérisé par le fait que la seconde version (23b) du modèle de bus est constituée d'une porte NON-ET (209) comportant une entrée inverseuse et une entrée non inverseuse, l'entrée inverseuse formant la première entrée de la version du modèle de bus, tandis que l'entrée non inverseuse constitue la seconde entrée de la version du modèle de bus et que la sortie de la porte NON-ET constitue la sortie de la version du modèle de bus.
